# EUROPEAN PATENT APPLICATION

(11) **EP 2 113 354 A2**
(43) Date of publication of application: **04.11.2009**
(21) Application number: 09005899.1
(22) Date of filing: 28.04.2009
(51) Int. Cl.: B28D 1/04, B23D 59/02, B23D 47/02

(54) **Table saw**

(30) Priority: 28.04.2008 US 48486 P
(71) Applicant: D-Cut Products INC., Lombard IL 60148-1238 (US)
(72) Inventor: Zhang, Charlie, Oak Brook, Illinois 60523 (US)
(74) Representative: Rentsch & Partner

(57) **Abstract**

A table saw for cutting materials, such as, for example, porcelain tiles, ceramic tiles, stone and glass. The table saw includes a base and a working table slidably positioned on the base. The table saw further including a power tool detachably mounted to the base and having a separate utility apart from the table saw. The power tool including a cutting element that extends at least partially through a slot in the working table. The working table movable along the base and with respect to the cutting element.

## Description

### CROSS REFERENCE TO RELATED APPLICATION

This application claims the benefit of U.S. provisional patent application, Serial No. 61/048,486, filed on 28 April 2008. This co-pending provisional patent application is hereby incorporated by reference herein in its entirety and is made a part hereof, including but not limited to those portions which specifically appear hereinafter.

### BACKGROUND OF THE INVENTION

### Field of the Invention

This invention relates generally to a table saw for cutting materials, such as, for example, porcelain tiles, ceramic tiles, stone and glass. More particularly, this invention relates to a table saw that includes a removable power tool and a movable support surface. The removable power tool preferably has a separate utility when removed from the table saw.

### Description of Related Art

Conventional work tables typically include a stationary, rotatable cutting blade mounted with respect to a fixed support surface of the work table. A work piece is moved along a length of the support surface towards the cutting blade in order to cut the work piece, as desired.

### SUMMARY OF THE INVENTION

A table saw according to this invention preferably includes a base and movable table positioned on the base. A rotating cutting tool including a cutting element, such as a cutting blade, is mounted to and/or disposed within the base, with at least a portion of the cutting blade extending through the movable table or relative thereto. Preferably, a height of the cutting blade that extends through the slot is adjustable, as well as a cutting angle of the cutting blade with respect to a work area defined by a support surface on the movable table.

The cutting tool according to this invention is preferably a hand tool, having separate and independent utility, such as an angle grinder or similar rotating cutting tool that includes a grip, a self-contained motor, a removable cutting blade, a power switch and a power cord. According to a preferred embodiment of this invention, the cutting tool is housed within the base in a removable fashion such that the cutting tool is separately operable outside the confines of the table saw, for instance, if the table saw is no longer needed for a particular project.

The table saw preferably further includes a guide bar positioned with respect to the movable table and the support surface. As a result, the movable table and thus the support surface is movable along the guide bar so as to permit the user to guide a work piece along the cutting tool and provide the desired cut. The support surface is preferably movable in a cutting direction along a length of the guide bar and with respect to the cutting blade.

Other objects and advantages will be apparent to those skilled in the art from the following detailed description taken in conjunction with the appended claims and drawings.

### BRIEF DESCRIPTION OF THE DRAWINGS

Fig. 1 is a perspective view of a table saw according to one embodiment of this invention;
Fig. 2 is an assembly drawing of the table saw shown in Fig. 1;
Fig. 3 is a perspective view of the table saw of the table saw shown in Fig. 1 without a working table, a brace and a portion of the blade cover;
Fig. 4 is a cross section view of the table saw shown in Fig. 1 along the section 4-4;
Fig. 5 is a top view of the table saw shown in Fig. 1 with an diagonal cutting attachment; and
Fig. 6 is a top view of the table saw shown in Fig. 1 with a miter block.

### DETAILED DESCRIPTION OF THE INVENTION

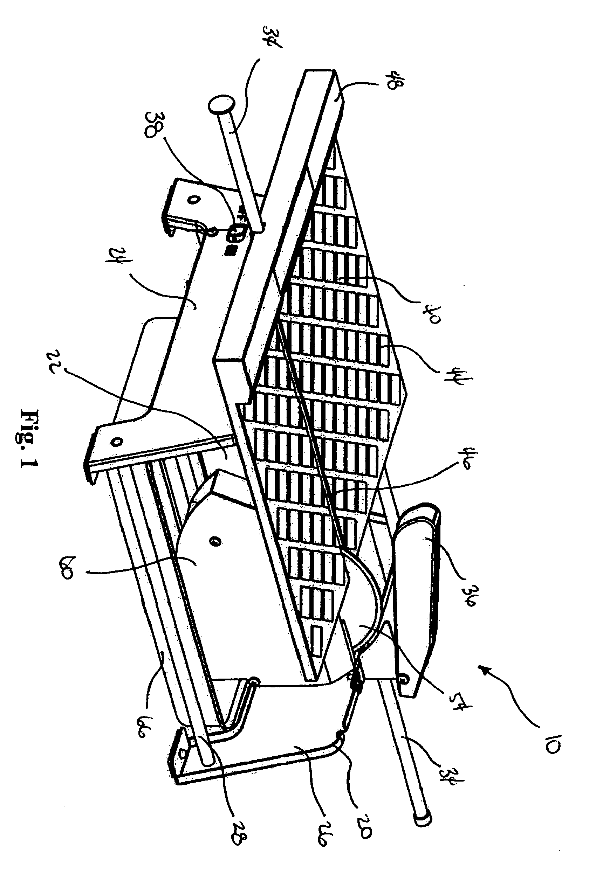

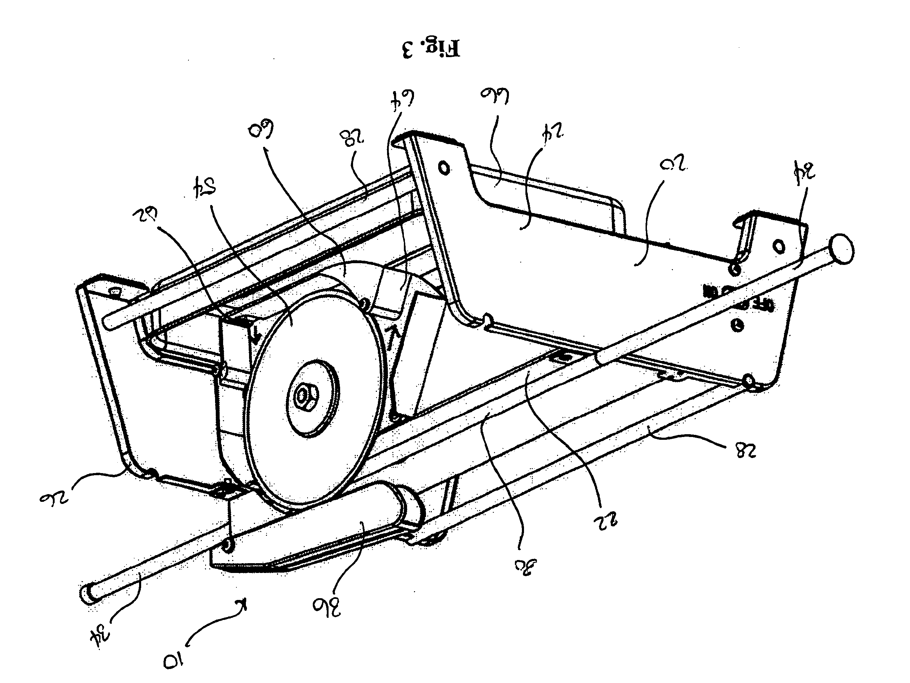

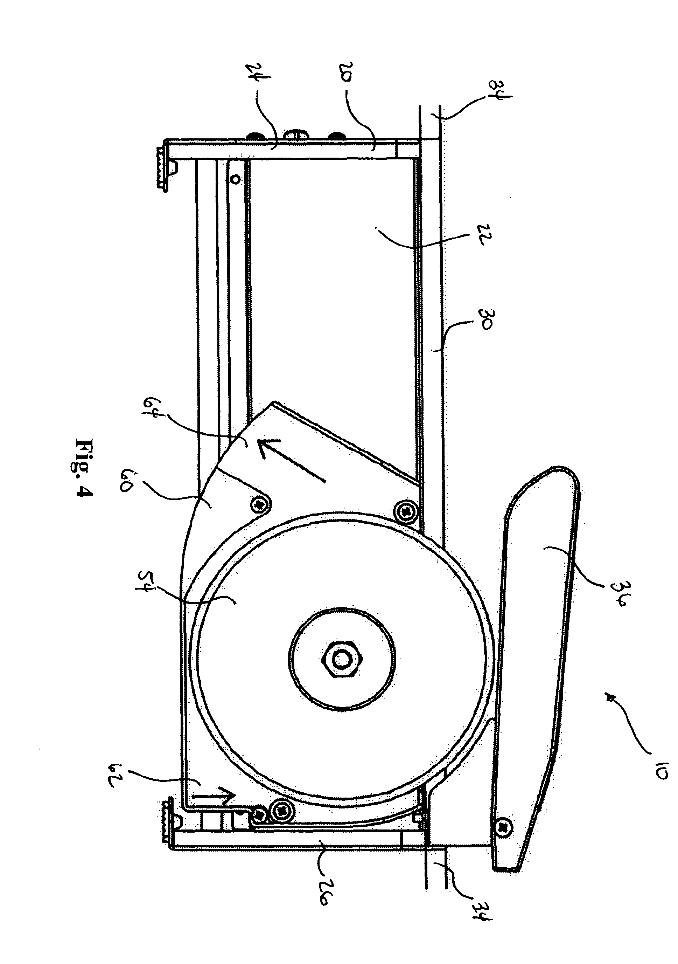

Figs. 1-4 show an embodiment of table saw 10 according to one embodiment this invention. Table saw 10 is desirably used to cut materials, including, but not limited to, ceramic tile, porcelain tile, stone and glass. Table saw 10 can be used in either a wet-cut or dry cut method.

Referring to Figs. 1-4, the present invention is directed to table saw 10 including base 20, working table 40 and power tool 50. Working table 40 is slidably positioned on base 20. According to a preferred embodiment of this invention, power tool 50 is mounted to or housed within base 20 in a removable fashion such that power tool 50 is separately operable outside the confines of table saw 10, for instance, if table saw 10 is no longer needed for a particular project.

Base 20 is made or formed of a suitable lightweight yet durable material, such as a fabricated metal, an alloy material and/or a molded plastic material, such as, Acrylonitrile Butadiene Styrene (ABS) plastic. Other suitable materials known to those skilled in the art can be used to make or form base 20. Preferably, base 20 has suitable dimensions and weight to allow table saw 10 to be portable.

In the embodiment shown in Figs. 1-4, base 20 can include center wall 22, first sidewall 24, second sidewall 26, a plurality of braces 28, center rail 30 and rear cover 32. First sidewall 24 and second sidewall 26 are each joined to a respective edge of center wall 22. The plurality of braces 28 span from first sidewall 24 to second sidewall 26 providing support and rigidity to base 20. This arrangement provides a light-weight, open structure.

Center rail 30 is preferably positioned above center wall 22. According to a preferred embodiment of this invention, center rail 30 fits into groove 42 on an underside of working table 40 permitting working table 40 to slide in a cutting direction along a length of center rail 30 and a top of base 20 and with respect to cutting element 52. Table saw 10 preferably includes at least one guide bar 34. In the embodiment of Figs. 1-2, a pair of guide bars 34 extend from each end of center rail 30, guide bars 34 are preferably connected to center rail 30 with a threaded connection, to permit attachment and removal, but may be connected in any other way known to one of ordinary skill in the art including, but not limited to a friction fit. Removable guide bars 34 permit table saw 10 to occupy a compact footprint when transported, stored or otherwise not in use.

Following application of one or more guide bars 34, working table 40 may slide relative to base 20 along a combined length of center rail 30 and guide bar(s) 34. Guide bar 34 may further be stored within base 20 adding to the ease of portability and storage.

In an alternative embodiment, center rail 30 and guide bars 34 are integrated into a single rail. In an alternative embodiment, a single guide bar extends from one side of center rail 30. Guide bar 34 and/or center rail 30 may comprise any desirable elongated shape and/or cross-section, including round, square, asymmetric, rectangular and/or any other desirable configuration.

Working table 40 is positioned on the base and is preferably moveable along center rail 30 and/or guide bar 34 as it slides on base 20 towards and away-from cutting element 54 so as to permit the user to guide a work piece along table saw 10 and provide the desired cut. In an alternative embodiment, groove 42 and/or center rail 30 can include rollers or bearings to reduce friction and improve the slideabity of working table 40.

In the embodiment of Figs.1-4, working table 40 comprises a generally planar support surface 44 and slot 46 extending through at least a portion of working table 40. Preferably, support surface 44 includes a first or front end portion and a second or back end portion and having or defining a work area. The work area provides support for a work piece, such as a wood, metal, stone or tile work piece. Support surface 44 is movable in the cutting direction with respect to base 20 and/or cutting element 54 to move the work piece towards cutting element 154 and pass the work piece through the work area to cut into and/or through the work piece using cutting element 154. Working table 40 is preferably made or formed of a suitable lightweight yet durable material, such as a fabricated metal, an alloy material and/or a molded plastic material, such as, Acrylonitrile Butadiene Styrene (ABS) plastic. Other suitable materials known to those skilled in the art can be used to make or form working table 40.

In the embodiment of Figs. 1-4, working table 40 includes edge support 48, which is positioned on one edge of working table 40 and preferably perpendicular to slot 46. Edge support 48 provides a safe area for a user to place his/her hands while operating table saw 10. Edge support 48 can include a straight edge for lining up a tile to be cut. Edge support 48 can also further include a ruler including metric and/or English units for measuring a length on the material to be cut. The straight edge and the ruler allowing for repeatable and accurate cutting.

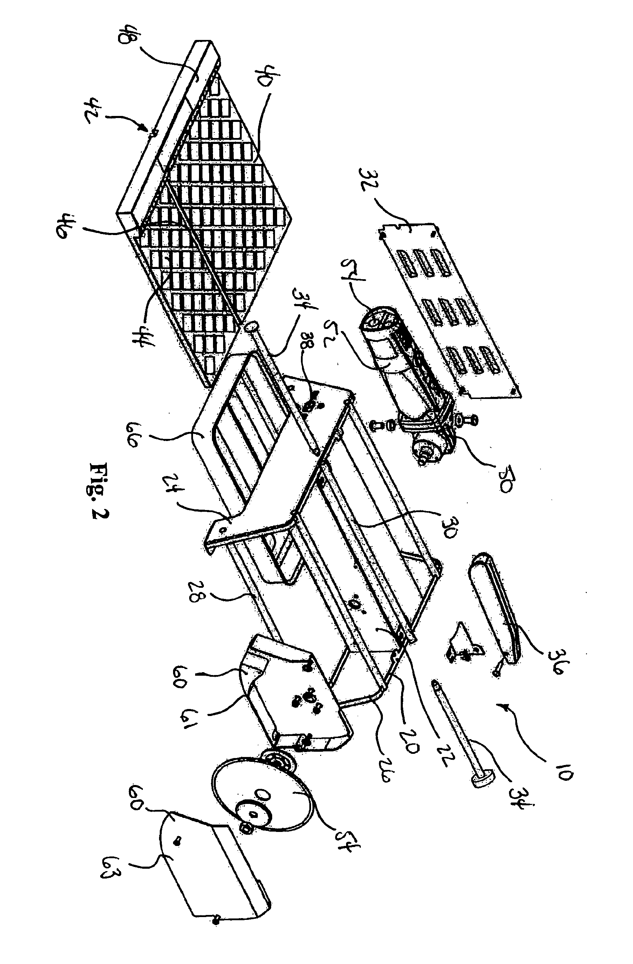

Referring to Fig. 2, table saw 10 includes power tool 50 removably mounted to base 20. Power tool 50 according to a preferred embodiment of this invention is preferably a hand tool having a separate utility apart from table saw 10, such as an angle grinder, a power sander, a drill or similar rotating tool. Power tool 50 preferably includes grip 52, a motor, power switch 53 and removable cutting element 54.

Power tool 50 is preferably removably mounted to base 20 in a manner to facilitate easy removal and yet still maintain a sturdy connection with respect to base. Power tool 50 may be connected with respect to base 20 using set screws, tool-less fasteners, brackets and/or any other suitable attachment method for facilitating reproducible and solid attachment and also simple removal for stand alone use of power tool 50.

Grip 52 facilitates using power tool 50 when removed from table saw 10 preferably allowing a user to safely handle power tool 50 away from cutting element 54 and allowing a user to counter-act any rotational forces that are transferred from the motor to the user when the cutting element 54 contacts a material to be cut, grinded and/or sanded.

In a preferred embodiment, because power switch 53 is positioned on power tool 50, base 10 includes an opening, an access panel and/or a switch 38. The opening, the access panel and/or the switch 38 allow the user to activate/deactivate power switch 53 of power tool 50 while power tool 50 is mounted to and/or housed within base 10.

Cutting elements 54 may be any suitable cutting element known to those skilled in the art and chosen according to a work piece material to be cut. Types of cutting element 54 can include, but not limited to, a circular blade, a standard blade, a drill bit or a cutting/grinding disk. The motor is preferably self-contained within power tool 50 and able to provide sufficient power to rotate cutting element 154 at a desired speed and/or with a desired torque.

As shown in Figs. 1-2, at least a portion of cutting element 54 extends through slot 46 and extends a desired distance from support surface 44 of working table 40. In one preferred embodiment of this invention, a height or distance of cutting element 54 extending through slot 46 is adjustable, as desired to cut into and/or through a tile or other work piece. For example, power tool 50 may be secured to base 20 with an adjustable bracket (not shown). The adjustable bracket can provide vertical adjustment ofpower tool 50 and cutting element 54 relative to support surface 44. Alternatively, fixed brackets may be used to house power tool 50 permit removable attachment of power tool 50 to base 20. Preferably, a cutting angle of cutting element 54 with respect to support surface 44 is also adjustable to cut the work piece at a desired cutting angle. For example to bevel an edge of a material.

Table saw 10 can further include blade guard 36. Blade guard 36 is preferably connected to base 20 with a hinge on one end of blade guard 36. Blade guard 36 protects a user of table saw 10 by covering an exposed portion of cutting element 54 that extends through slot 46.

Referring to Figs. 1-4, table saw 10 preferably includes blade cover 60. In this embodiment, blade cover 60 is mounted to center wall 22 and is composed of two parts 61, 63 which surround a portion of cutting element 54. Blade cover 60 can further includes inlet channel 62 and outlet channel 64. In operation, blade cover 60 may be partially submerged in water in tray 66, the rotation of cutting element 54 draws water from tray 66 through inlet channel 62 to cool cutting element 54 as it cuts a material. As cutting element 54 cuts a material, dust and chips are created. The chips and dust, along with water, may be discharged from the blade cover 60 via outlet channel and preferably away from the water in tray 66 to prevent contaminating the water with dust and/or chips.

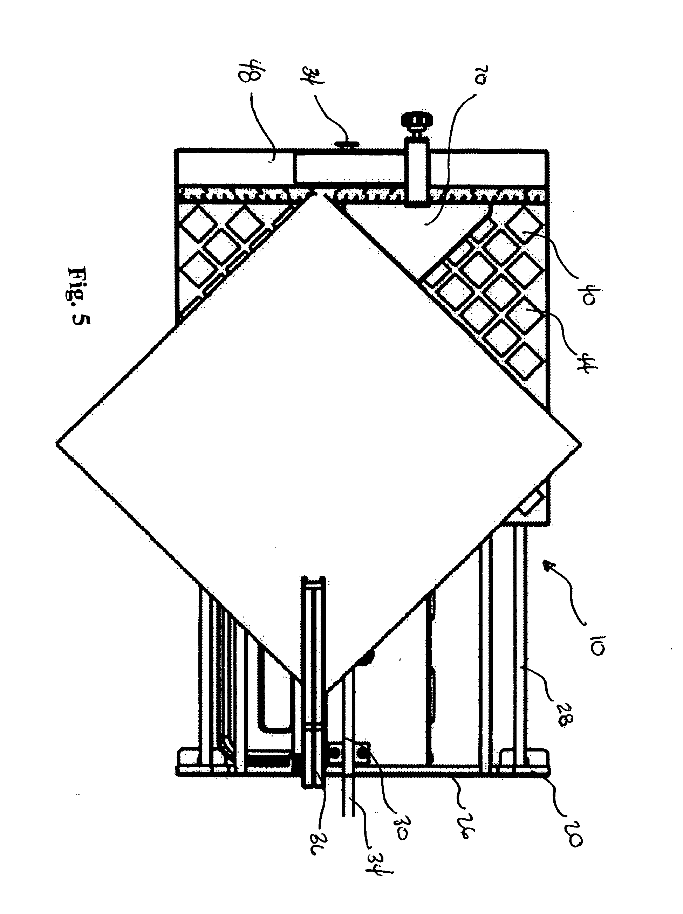

Fig. 5 shows table saw 10 further including diagonal cutting attachment 70 positioned on support surface 44 and preferably joined to edge support 48 with a bracket. Diagonal attachment 70 supports a workpiece at an angle to edge support 48 allowing the work piece to be cut at a non-perpendicular angle.

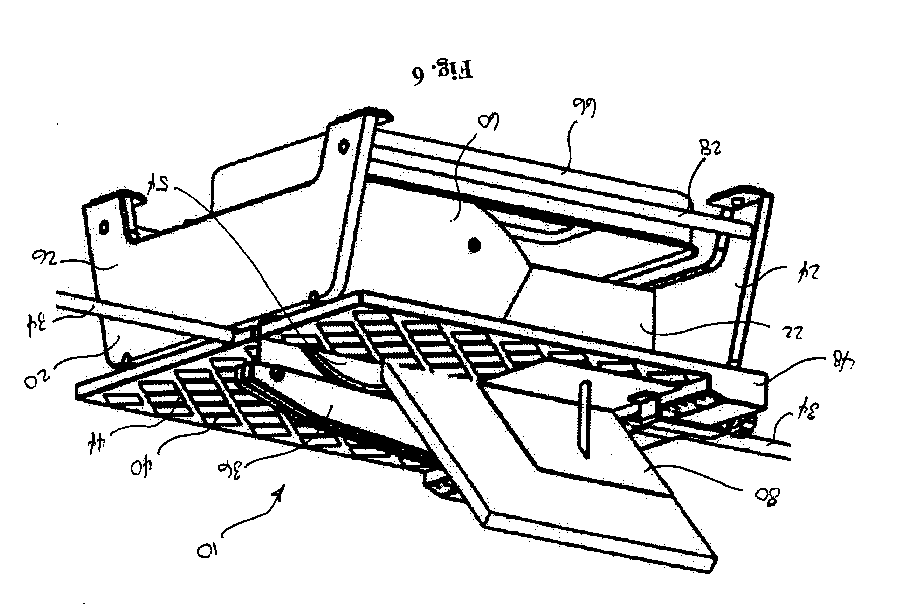

Fig. 6 shows table saw 10 further including miter block 80 positioned on support surface 44. Miter block 80 supports a work piece at angle to support surface 44 and/or cutting element 54 allowing the work piece to be cut at a non-perpendicular angle. In a preferred embodiment, miter block is adjustable to a plurality of angle.

The invention illustratively disclosed herein suitably may be practiced in the absence of any element, part, step, component, or ingredient which is not specifically disclosed herein.

While in the foregoing detailed description this invention has been described in relation to certain preferred embodiments thereof, and many details have been set forth for purposes of illustration, it will be apparent to those skilled in the art that the invention is susceptible to additional embodiments and that certain of the details described herein can be varied considerably without departing from the basic principles of the invention.

## Claims

1. A table saw comprising:
a base;
a working table slideably positioned on the base, the working table including a generally planar support surface;
a power tool detachably mounted to the base and including a rotating element at least partially extending through the support surface, wherein the power tool is operable when detached from the table saw.

2. The table saw of Claim 1, wherein the rotating element comprises a circular saw blade.

3. The table saw of Claim 2 further comprising a blade cover mounted to the base and at least partially surrounding the circular blade, the blade cover including an inlet channel and an outlet channel.

4. The table saw of Claim 3 further comprising a tray positioned beneath the blade cover, wherein the circular blade draws a liquid from the tray through the inlet channel.

5. The table saw of Claim 1, wherein the power tool includes a hand grip and comprises one of an angle grinder, a circular saw, a drill and a power sander.

6. The table saw of Claim 1 further comprising a detachable guide bar connected to the base with a threaded connection, the working table slidable along the base and the guide bar and with respect to the rotating element.

7. The table saw of Claim 6 wherein the base includes a storage space for storing the guide bar.

8. The table saw of Claim 1 further comprising a pair of detachable guide bars connected along the forward and backward range of motion of the working table, the working table slideable along the pair of detachable guide bars.

9. The table saw of Claim 1 further comprising a mitre block positioned on the support surface, wherein a surface of the mitre block forms a cutting angle with the rotating element.

10. The table saw of Claim 1 further comprising an adjustable bracket disposed within the base for securing the power tool, wherein the adjustable bracket permits a height of the of the rotating element to be adjusted.

11. The table saw of Claim 1 further comprising a blade guard hinged with respect to the base and partially positioned above the support surface and the rotating element.

12. A table saw comprising:
a base;
a working table slidably positioned on the base along a pair of guide rails, the guide rails removably attached with respect to the base, the working table including a generally planar support surface;
a power angle grinder detachably mounted to the base and including a grip and a saw blade at least partially extending through the support surface, wherein the power angle grinder is operable when detached from the table saw.

13. The table saw of Claim 12 further comprising a blade cover mounted to the base and at least partially surrounding the saw blade, wherein the blade cover includes an inlet channel and an output channel.

14. The table saw of Claim 13 further comprising a tray positioned beneath the blade cover, wherein the saw blade draws a liquid from the tray through the inlet channel.

15. The table saw of Claim 12 further comprising a blade guard positioned above the support surface and the saw blade.
